**Europäisches Patentamt**

**European Patent Office**

**Office européen des brevets**

(19)

(11) Veröffentlichungsnummer : **0 362 784 B1**

(12) # EUROPÄISCHE PATENTSCHRIFT

(45) Veröffentlichungstag der Patentschrift :
**09.08.95 Patentblatt 95/32**

(51) Int. Cl.$^6$ : **G01F 1/28**

(21) Anmeldenummer : **89118301.4**

(22) Anmeldetag : **03.10.89**

(54) **Gerät zum Erkennen des Durchflusses eines viskosen Mediums durch eine Leitung.**

(30) Priorität : **04.10.88 DE 3833678**

(43) Veröffentlichungstag der Anmeldung :
**11.04.90 Patentblatt 90/15**

(45) Bekanntmachung des Hinweises auf die
Patenterteilung :
**09.08.95 Patentblatt 95/32**

(84) Benannte Vertragsstaaten :
**AT BE CH DE ES FR GB IT LI NL SE**

(56) Entgegenhaltungen :
**EP-A- 0 170 552**
**DE-A- 2 146 115**
**US-A- 3 722 278**
**MECHANICAL ENGINEERING, Band 89, Nr. 3,**
**März 1967, Seite 48; "NASA tech briefs"**

(73) Patentinhaber : **HYDAC TECHNOLOGY GMBH**
**Industriestrasse**
**D-66280 Sulzbach (DE)**

(72) Erfinder : **Hornung, Dieter, Dr. Dipl.-Phys.**
**Kantstrasse 11**
**D-6797 Waldmohr (DE)**
Erfinder : **Dyroff, Walter, Ing. (grad.)**
**Schieferweg 15**
**D-4837 Verl 1 (DE)**
Erfinder : **Sahner, Paul, Dipl.-Ing. (FH)**
**Ottostrasse 32**
**D-6638 Dillingen/Saar (DE)**
Erfinder : **Hoffmann, Michael**
**Heiligenwalderstrasse 26**
**D-6689 Wemmetsweiler (DE)**

(74) Vertreter : **Patentanwälte Phys. H. Bartels**
**Dipl.-Ing. H. Fink Dr.-Ing M. Held Dipl.-Ing. M.**
**Bartels**
**Lange Strasse 51**
**D-70174 Stuttgart (DE)**

## Beschreibung

Die Erfindung betrifft ein Gerät zum Erkennen des Durchflusses eines viskosen Mediums durch eine Leitung, welches die Merkmale des Oberbegriffs des Anspruches 1 aufweist.

Zur Kontrolle der Schmiermittelversorgung von Arbeitsmaschinen sind Geräte mit einer Kugel bekannt, die entgegen ihrer Gewichtskraft durch das die Leitung durchströmende Medium von ihrem Sitz abgehoben wird, wobei die Leitung im Bewegungsbereich der Kugel einen vom Sitz für die Kugel in Fließrichtung des Mediums zunehmenden Innendurchmesser hat. Diese bekannten Geräte sind nicht lageunabhängig, da die Leitung zumindest im Bewegungsbereich der Kugel eine vertikale Erstreckungsrichtung haben muß. Ferner ist das Ausmaß, in dem die Kugel von ihrem Sitz abhebt, stark von der Viskosität des Mediums abhängig. Dies ist darauf zurückzuführen, daß die Durchflußmessung bei diesen Geräten über den Strömungswiderstand der Kugel erfolgt. Hinzu kommt, daß eine Druckwelle, welche sich im Medium fortpflanzt und auf die Kugel trifft, ein Abheben der Kugel von ihrem Sitz verursacht, selbst wenn kein Durchfluß erfolgt. Schließlich ist es mit diesen bekannten Geräten nicht möglich, intermittierend fließende, sehr kleine Mengen zuverlässig zu detektieren.

Letzteres gilt auch für ein bekanntes Gerät der eingangs genannten Art (DE-A-2 146 155). Bei diesem Strömungswächter tritt der Kolben entgegen der ihn in Anlage an einem Sitz zu halten suchenden Federkraft um so weiter aus dem ihn unter Bildung eines Ringraumes umgebenden Abschnitt der vom Medium durchströmten Leitung heraus, je größer der am Kolben infolge der Durchströmung des Ringraumes auftretende Druckabfall ist, wobei dieser Druckabfall bei gleichbleibender Strömungsgeschwindigkeit im Ringraum abnimmt, je weiter der Kolben von seinem Sitz entfernt ist. Die Funktionsweise ist deshalb mit der Funktionsweise der Schwebekörperdurchflußmesser vergleichbar.

Bei einem anderen bekannten Durchflußmeßgerät (EP-A-170 552) ist in einem zylindrischen Kanal, der eine Einlaßkammer mit einer Auslaßkammer für das Medium verbindet, axial verschiebbar ein Kolben unter Bildung eines Ringraumes angeordnet, der so dimensioniert ist, daß sich in ihm eine laminare Strömung ausbildet. An seinen beiden Enden ist der Kolben axial verschiebbar mittels je einer Blattfeder geführt. Diese beiden Federn erzeugen auch die Rückstellkraft, welche den Kolben in seiner Ausgangslage zu halten suchen. Auch bei diesem Durchflußmeßgerät hängt die Verschiebung des Kolbens aus seiner Ausgangslage heraus von dem Druckabfall des den Ringraum durchströmenden Mediums zwischen der Einlaßkammer und der Auslaßkammer ab. Die Verschiebung des Kolbens, welche zu einer Veränderung der Kopplung von zwei Spulen führt, in welche ein gleichachsig zum Kolben angeordneter Permanentmagnet mehr oder weniger tief eintaucht, ist deshalb ein Maß für die momentane Durchflußrate.

Der Erfindung liegt die Aufgabe zugrunde, ein Gerät der eingangs genannten Art zu schaffen, das ein intermittierend fließendes, viskoses Medium mengenmäßig, und zwar auch bei kleinen Mengen, zuverlässig zu detektieren vermag und das lageunabhängig ist sowie in weiten Grenzen viskoseunabhängig arbeitet. Diese Aufgabe löst ein Gerät mit den Merkmalen des Anspruches 1.

Dank der Verschiebung des Kolbens aus seiner Ausgangsstellung heraus entsprechend dem über die Zeit integrierten Volumen des durchgeflossenen Mediums erhält man eine volumetrische Messung, wodurch das Gerät die geforderte Viskositätsunabhängigkeit hat. Ein weiterer Vorteil dieser integrierenden Arbeitsweise besteht darin, daß zuverlässig sehr kleine Mengen gemessen werden können. Daher bereitet es keine Probleme, beispielsweise sehr kleine, impulsartig fließende Ölmengen in der Größenordnung von 10 mm$^3$ mit ausreichender Genauigkeit zu messen und damit nachzuweisen, daß eine solche Menge durch die Leitung geflossen ist. Das integrierende Verhalten des erfindungsgemäßen Gerätes führt weiterhin dazu, daß Druckwellen, welche die Leitung durchlaufen, ohne daß gleichzeitg das Medium die Leitung durchströmt, nicht zu einer Auslenkung des Kolbens und damit zu einer Fehlanzeige oder Fehlmessung führen. Dies ist beispielsweise für den Einsatz in Schmieranlagen von großer Bedeutung, wo im Falle des Verschlusses einer Ölaustrittsstelle, beispielsweise infolge einer Verstopfung, eine Auslenkung des Kolbens durch eine Druckwelle ohne ein gleichzeitiges Fließen des Öles zu der Fehlmeldung führen würde, daß die Schmierstelle mit Öl versehen worden ist.

Die Lageunabhängigkeit des erfindungsgemäßen Gerätes wird dadurch erreicht, daß der Kolben durch eine vorgespannte Feder belastet ist.

Die kompakte Bauweise, welche sich mit dem erfindungsgemäßen Gerät erreichen läßt, ermöglicht einen Einbau auch unter räumlich beengten Verhältnissen, beispielsweise direkt an einer Schmierstelle. Weiterhin erlaubt das erfindungsgemäße Bauprinzip eine korrosionsbeständige Ausführung. Permanentmagnetisierbare Bauteile sind nicht erforderlich und mit dem Gerät kann eine Auswerteelektronik zu einer Baueinheit vereinigt sein, wobei die Auswerteelektronik einen Normausgang haben kann. Schließlich läßt sich auch ein sehr großer Meßbereich realisieren.

Selbstverständlich ist die Einsatzmöglichkeit nicht auf die Messung von Ölmengen und den Nachweis eines Ölflusses beschränkt. Auch andere flüssige, viskose Medien, wie sie beispielsweise in der chemischen Industrie Verwendung finden, können erfaßt werden.

Vor allem dann, wenn die Abklingkonstante $\tau$ sehr viel größer ist als die Dosierzeit $t_{Dosier}$, läßt sich eine sehr gute Meßgenauigkeit erreichen.

Vorteilhaft ist eine Anströmung des Kolbens durch das Medium derart, daß die Strömung gegen den Spalt zwischen dem Kolben und der Innenwand der Leitung gerichtet ist. Eine derartige Anströmung wird durch die Merkmale des Anspruches 2 gefördert.

Vor allem dann, wenn es erforderlich ist, auch relativ kleine Auslenkungen des Kolbens sicher zu erfassen, ist eine Ausbildung des Detektors gemäß Anspruch 3 vorteilhaft, weil die veränderbare Koppelung der Sensorspule mit der Erregerspule über den Kolben zu einer großen Änderung der in der Sensorspule induzierten Spannung in Abhängigkeit von der Kolbenstellung führt.

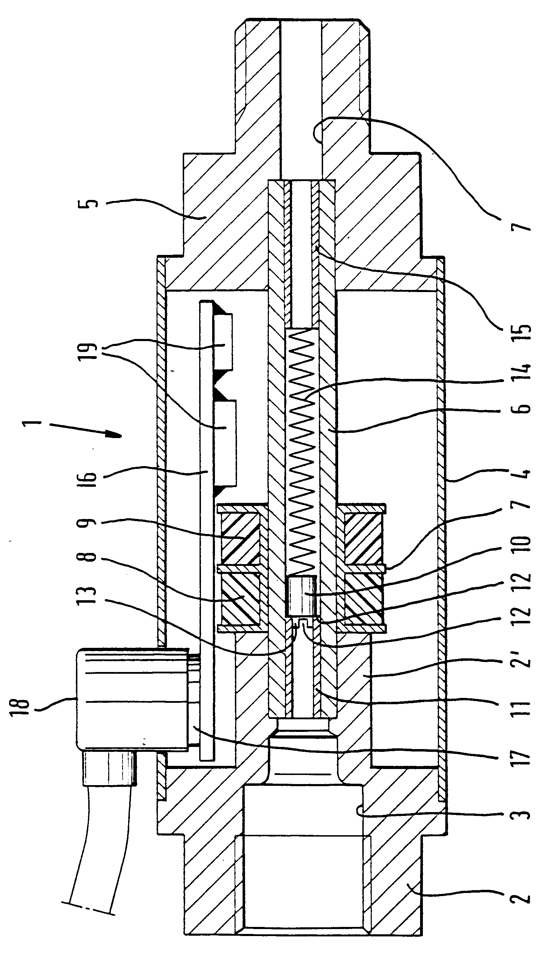

Im folgenden ist die Erfindung anhand eines in der Zeichnung dargestellten Ausführungsbeispiels im einzelnen erläutert. Die einzige Figur zeigt einen vergrößert dargestellten Längsschnitt des Ausführungsbeispiels.

Ein als Ganzes mit 1 bezeichneter Sensor zur volumetrischen Erfassung kleiner Schmierölmengen mit einem Volumen in der Größenordnung von 10 mm³ bei einem Visositätsbereich von etwa 10 cSt bis etwa 1.000 cSt (1 cSt = 1 mm²/s) hat im Ausführungsbeispiel eine im wesentlichen zylindrische Form mit einem Außendurchmesser von 20 mm und einer Länge von 50 mm. Ein erster Endkörper 2 aus rostfreiem Edelstahl 1.4301 ist mit einer zentralen Axialbohrung 3 versehen, in die zur Herstellung einer dichten Verbindung eine nicht dargestellte Ölzufuhrleitung eingeführt wird. Der erste Endkörper 2 greift in das eine Ende eines aus dem gleichen Material bestehenden, rohrförmigen Gehäuse 4 ein, das gleichachsig zum ersten Endkörper 2 angeordnet und mit diesem verbunden ist. In das andere Ende des Gehäuses 4 ist ebenfalls gleichachsig zu diesem ein zweiter Endkörper 5 eingesetzt, der ebenfalls aus rostfreiem Edelstahl 1.4301 besteht und dessen über das Ende des Gehäuses 4 überstehender Abschnitt einen Schraubanschluß für eine nicht dargestellte Ölabfuhrleitung bildet.

Der in das Innere des Gehäuses 4 ragende Endabschnitt 2′ des ersten Endkörpers 2 hat einen etwa auf die Hälfte reduzierten Außendurchmesser In den in diesem Endabschnitt 2′ liegenden Abschnitt der Axialbohrung 3 ist öldicht der eine Endabschnitt eines Rohres 6 eingesetzt, dessen anderer Endabschnitt in die mit der Axialbohrung 3 fluchtende Axialbohrung 7 des zweiten Endkörpers 5 dicht eingreift.

Das Rohr 6 trägt ein Doppelspulengehäuse 7, das an der Stirnfläche des Endabschnittes 2′ anliegt. Diesem Endabschnitt 2′ benachbart ist eine in der einen Kammer des Doppelspulengehäuse 7 liegende Erregerspule 8. Die andere Kammer des Doppelspulengehäuses 7 enthält eine axial neben der Erregerspule 8 liegende Sensorspule 9.

Der Innendurchmesser des Rohres 6 ist so gewählt, daß zwischen der Innenwandung des Rohres 6 und der Mantelfläche eines im Rohr 6 angeordneten Kolbens 10, der einen Durchmesser von 2 mm hat, ein Spalt mit einer Spaltweite von 0,05 mm vorhanden ist. Die axiale Länge des Kolbens 10, der aus einem weichmagnetischen Material besteht, beträgt 3 mm.

In demjenigen Endabschnitt des Rohres 6, welcher in den Endabschnitt 2′ eingreift, ist eine erste Hülse 11 unverschiebbar eingesetzt, welche nur geringfügig über die am Doppelspulengehäuse 7 anliegende Stirnfläche des Endabschnittes 2′ übersteht. Dieses Ende der Hülse 11 bildet in Umfangsrichtung im Wechsel aufeinanderfolgende Zähne 12 und Zahnlücken 13, wobei die Zähne 12 mit ihrer freien Stirnfläche einen Sitz für die eine Stirnfläche des Kolbens 10 bilden. An der anderen Stirnfläche des Kolbens 10 liegt das eine Ende einer vorgespannten Schraubenfeder 14 an, deren anderes Ende an einer zweiten Hülse 15 abgestützt ist, welche in den in den zweiten Endkörper 5 eingreifenden Endabschnitt des Rohres 6 fest eingesetzt ist. Die Federkonstante der Schraubenfeder 14 beträgt 0,13 N/mm.

Damit der Sensor 1 die am Kolben 10 vorbeigeflossene Ölmenge über die Zeit zu integrieren vermag und die Auslenkung des Kolbens 10 aus derjenigen Stellung, in welcher er an der ersten Hülse 11 anliegt, entgegen der Kraft der Schraubenfeder 14 ein Maß für die geflossene Ölmenge ist, muß die Bedingung

$$\frac{D\,a^3}{\pi\,r^3 l\,\rho v \cdot 6} = \frac{1}{\tau} << \frac{1}{t_{Dosier}}$$

erfüllt sein. Dabei bedeuten

| D | die Federkonstante |
| a | die Spaltweite |
| r | der Kolbenradius |
| l | die Kolbenlänge |
| $\rho$ | die Dichte des Öls |
| $v$ | die kinematische Viskosität |
| $\tau$ | die Abklingzeitkonstante |
| $t_{Dosier}$ | die zeitliche Länge des Anteils des Ölimpules, in dem die pro Zeiteinheit fließende Ölmenge annähernd konstant ist. |

Innerhalb des Gehäuses 4 in dem Zwischenraum zwischen der Gehäuseinnenwand einerseits und dem Endabschnitt 2', dem Doppelspulengehäuse 7 sowie dem freiliegenden Abschnitt des Rohres 6 andererseits ist eine Platine 16 fest angeordnet, welche mit einem Steckanschluß 17 versehen ist, auf den durch eine Öffnung im Gehäuse 4 hindurch ein Verbindungsstecker 18 aufgesteckt werden kann, und welche alle Bauteile einer Signalvorverarbeitungselektronik 19 trägt, an deren Eingang der Ausgang der Sensorspule 9 angeschlossen ist.

Die Erregerspule 8 wird mit einem aus der Signalvorverarbeitungselektronik kommenden Wechselstrom erregt. Wenn kein Öl durch das Rohr 6 hindurch fließt und der Kolben 10 an der ersten Hülse 11 anliegt, ist die magnetische Kopplung der Sensorspule 9 mit der Erregerspule 8 vernachlässigbar klein. Die Signalverarbeitungselektronik 19 liefert deshalb bei dieser Kolbenstellung kein Ausgangssignal. Ein solches Signal tritt hingegen auf, wenn der Kolben 10 von der ersten Hülse 11 abgehoben ist, wobei die Größe des Ausgangssignal ein Maß für den Abstand zwischen dem Kolben 10 und der ersten Hülse 11 ist, der wiederum von der durchgeflossenen Ölmenge abhängt. Die Siganalvorverarbeitungselektronik 19 ist in diesem Falle so ausgebildet, daß ihr Ausgangssignal den genormten Werten für Näherungsschalter entspricht.

Eine Auslenkung des Kolbens 10, also ein Abheben von der ersten Hülse 11, tritt aber auch dann auf, wenn, beispielsweise infolge eines undichten Ventils, ständig eine geringe Ölmenge durch den Sensor 1 fließt. Der Sensor 1 kann deshalb nicht nur kontrollieren, ob bei jedem Ölimpuls die erforderliche Ölmenge geflossen ist. Er kann auch das ständige Fließen einer geringen Ölmenge, wie es bei einem undichten Zumeßventil auftreten kann, anzeigen. Schließlich kann mit Hilfe des Detektors 1 auch erkannt werden, ob die Ölaustrittsstelle am Leitungsende offen oder verschlossen ist, weil im letzt genannten Falle der auftretende Druck nicht zu einem Abheben des Kolbens 10 von der ersten Hülse 11 führt.

## Patentansprüche

1. Gerät zum Erkennen des Durchflusses eines viskosen Mediums durch eine Leitung mit
   a) einem Kolben (10), der unter Freilassung eines Ringspaltes in einem eine entsprechende zylindrische Form aufweisenden Abschnitt (15) der Leitung in deren Längsrichtung bewegbar angeordnet ist,
   b) einer vorgespannten Feder (14), die ständig auf den Kolben (10) eine entgegen der Strömungsrichtung des Mediums gerichtete Kraft ausübt, welche ohne ein Fließen des Mediums den Kolben (10) in seiner Ausgangslage hält, und
   c) wenigstens einem eine Stellung des Kolbens (10) in dessen Verschiebebereich erkennenden und durch ein Signal kennzeichnenden Detektor (8, 9, 19),
   dadurch gekennzeichnet, daß das Gerät für Mengendetektierung bei einem intermittierenden Fließen des viskosen Mediums ausgebildet ist, wobei für jeweils eine als Dosierzeit $t_{Dosier}$ bezeichnete Zeitspanne die Abklingkonstante $\tau$ größer gewählt ist als die Dosierzeit $t_{Dosier}$, wobei die Abklingkonstante $\tau$ definiert ist durch die Gleichung

$$\frac{1}{\tau} = \frac{D\,a^3}{\pi \cdot r^3 l\,\rho v.\,6}$$

und

| | |
|---|---|
| D | die Federkonstante, |
| a | die Spaltweite, |
| r | der Kolbenradius, |
| l | die Kolbenlänge, |
| ρ | die Dichte des Mediums, |
| ν | die kinematischen Viskosität |

bedeuten, so daß die Verschiebung des Kolbens (10) aus seiner Ausgangslage heraus dem über die Zeit integrierten Volumen des durchgeflossenen Mediums mindestens annähernd entspricht.

2. Gerät nach Anspruch 1, dadurch gekennzeichnet, daß für den Kolben (10) ein seine Bewegungsmöglichkeit entgegen der Förderrichtung begrenzender Sitz vorgesehen ist und daß dieser Sitz und/oder der Kolben an seinem dem Sitz zugekehrten Ende mit Ausnehmungen (13) für einen Durchtritt des Mediums gegen den Spalt zwischen dem Kolben (10) und Innenwandung des ihn enthaltenden Abschnittes (15) der Leitung versehen ist.

3. Gerät nach Anspruch 1 oder 2, dadurch gekennzeichnet, daß der Kolben (10) aus einem einen magnetischen Fluß gut leitenden Material besteht, in dem den Kolben (10) enthaltenden Abschnitt (15) der Leitung in Leitungslängsrichtung eine Erregerspule (8) und eine Sensorspule (9) nebeneinander angeordnet sind und die magnetische Kopplung zwischen der Sensorspule (9) und der Erregerspule (8) von der Stellung

EP 0 362 784 B1

des Kolbens (10) abhängig ist.

4. Gerät nach Anspruch 3, dadurch gekennzeichnet, daß der Ausgang der Sensorspule an eine innerhalb des Gerätes angeordnete Signalvorverarbeitungselektronik (19) angeschlossen ist.

## Claims

1. Apparatus for determining the rate of flow of a viscous medium through a conduit with

   a) a piston (10), which, leaving free an annular gap in a section (15) of the conduit comprising a corresponding cylindrical shape, is arranged to move in its longitudinal direction,

   b) a pretensioned spring (14), which exerts a force directed in opposition to the flow direction of the medium, constantly on the piston (10), which without a flow of the medium, keeps the piston (10) in its initial position, and

   c) at least one detector (8, 9, 19) determining a position of the piston (10) in its displacement range and which is characterised by a signal,

   characterised in that the apparatus is constructed for quantitative detection in the case of an intermittent flow of the viscous medium, whereby for respectively one time interval designated as the dosing time $t_{Dosier}$, the decay constant is chosen to be greater than the dosing time $t_{Dosier}$, the decay constant being defined by the equation

   $$\frac{1}{\tau} = \frac{D\,a^3}{\pi \cdot r^3 l\,\rho v \cdot 6}$$

   and

   D     denotes the spring constant,
   a     denotes the gap width,
   r     denotes the piston radius,
   l     denotes the piston length,
   $\rho$     denotes the density of the medium,
   $\nu$     denotes the kinematic viscosity,

   so that the displacement of the piston (10) from its initial position corresponds at least approximately to the volume of the medium which has passed through, integrated over time.

2. Apparatus according to Claim 1, characterised in that provided for the piston (10) is a seat defining its possibility of movement in opposition to the conveying direction and that this seat and/or the piston is provided at its end facing the seat with recesses (13) for a passage of the medium towards the gap between the piston (10) and inner wall of the section (15) of the conduit containing it.

3. Apparatus according to Claim 1 or 2, characterised in that the piston (10) consists of a material which is a good magnetic flux conductor, an excitation coil (8) and a sensor coil (9) being located one beside the other in the section (15) of the conduit containing the piston (10) and the magnetic coupling between the sensor coil (9) and the excitation coil (8) being dependent on the position of the piston (10).

4. Apparatus according to Claim 3, characterised in that the output of the sensor coil is connected to signal pre-processing electronics (19) located within the apparatus.

## Revendications

1. Appareil pour la détection du passage d'un fluide visqueux traversant une conduite, comportant :

   a) un piston (10), lequel, laissant libre un interstice de forme annulaire, est disposé de manière mobile en direction longitudinale dans une section (15) de forme cylindrique correspondante de ladite conduite ;

   b) un ressort (14) placé sous une tension initiale, lequel exerce, de manière constante sur le piston, une force orientée dans le sens opposé du flux du fluide, cette force maintenant ledit piston (10) dans sa position d'origine sans écoulement du fluide ; et

   c) au moins un détecteur (8, 9, 10), détectant une position du piston (10) dans sa zone de déplacement et signalant cette position par un signal ;

   caractérisé en ce que l'appareil est réalisé pour permettre une détection quantitative dans le

5

cas d'un écoulement intermittent du fluide visqueux, tandis que pour chaque laps de temps appelé temps de dosage ($T_{Dosier}$), on choisira un coefficient d'amortissement $\tau$ supérieur à ce temps de dosage $T_{Dosier}$, ledit coefficient d'amortissement $\tau$ étant défini par l'équation

$$\frac{1}{\tau} = \frac{D\,a^3}{\pi \cdot r^3 l\ \rho v.\ 6}$$

et

où

D      constante élastique du ressort

a      largeur de l'interstice

r      rayon du piston

l      longueur du piston

$\rho$      densité du fluide

$\nu$      viscosité cinétique,

de telle sorte que le déplacement du piston (2) à partir de sa position initiale, correspond au moins approximativement au volume, intégré par rapport au temps, du fluide écoulé.

2.      Appareil selon la revendication 1, caractérisé en ce que pour le piston (2) est prévu un siège limitant sa possibilité à se déplacer dans la direction opposée à celle du transport, et en ce que ce siège et/ou le piston à l'extrémité orientée vers ledit siège, est muni d'encoches (13) pour un passage du fluide en direction de l'interstice entre ledit piston (10) et la paroi intérieure de la section de conduite (15) dans laquelle il est contenu.

3.      Appareil selon la revendication 1 ou 2, caractérisé en ce que le piston (10) est constitué en une matière bonne conductrice d'un flux magnétique, en ce que, dans la section de conduite (15) contenant le piston (10), sont disposées côte-à-côte en direction longitudinale de la conduite, une bobine d'excitation (8) et une bobine sensible (9), et en ce que le couplage magnétique entre la bobine sensible (9) et la bobine d'excitation (8) dépend de la position dudit piston (10).

4.      Appareil selon la revendication 3, caractérisé en ce que la sortie de la bobine sensible est raccordée à un système électronique (19) de pré-élaboration du signal, lequel est disposé à l'intérieur de l'appareil.